# FASCICULE DE BREVET EUROPEEN

(11) **EP 0 515 342 B1**
(45) Date de publication et mention de la délivrance du brevet: **01.06.1994**
(21) Numéro de dépôt: 92870028.5
(22) Date de dépôt: 17.02.1992
(51) Int. Cl.: G11B 33/04

(54) **Coffret pour au moins un disque à haute densité d'information**
Behälter für mindestens eine Platte mit hoher Informationsdichte
Container for at least one disc with high information density

(30) Priorité: 23.05.1991 BE 9100496; 06.09.1991 BE 9100832
(43) Date de publication de la demande: 25.11.1992
(73) Titulaire: CARTONNERIES DE THULIN S.A., B-7350 Thulin (BE)
(72) Inventeur: Lammerant, Henri, B-7350 Thulin (BE); Lammerant, Filip, B-7350 Thulin (BE)
(74) Mandataire: Stenger, Watzke & Ring Patentanwälte

(56) Documents cités:
- EP-A- 0 114 631
- EP-A- 0 188 663
- EP-A- 0 252 226
- EP-A- 0 420 350
- WO-A-90/02403
- DE-A- 3 414 903
- DE-U- 8 523 194
- US-A- 4 702 369
- IBM TECHNICAL DISCLOSURE BULLETIN, vol. 17, no. 12, Mai 1975, New York,US;page 3745,A.COX et al.:"Container for recording disks"

## Description

La présente invention concerne un coffret de rangement pour support d'information en forme de disque à haute densité d'enregistrement, plus particulièrement pour le rangement de disques audionumériques connus sous la dénomination de compact discs, "CD" (en français "disques compacts").

On connaît la cassette rectangulaire pour le rangement d'un disque compact, constituée d'un boîtier formé d'une base, d'un couvercle, en matière plastique généralement transparente et d'un porte-disque qui s'insère, se bloque dans la base et qui est en matière plastique généralement foncée.

La base du boîtier comporte un fond plat rectangulaire et quatre parois. Les deux parois latérales présentent au milieu une découpe pour éviter le frottement du disque avec la paroi et pour faciliter la saisie, le placement ou l'extraction de ce disque. Entre la base et le porte-disque, on peut insérer une feuille de titre illustrée se référant au disque. Cette feuille s'étend le long des parois postérieure et antérieure pour permettre de lire le titre également sur les tranches de la cassette une fois rangée.

Le couvercle comporte une paroi supérieure rectangulaire, presque carrée, un peu moins longue que la base. Deux parois latérales s'élèvent de cette paroi et s'étendent vers l'arrière, formant branches élastiques munies de tourillons qui s'engagent dans des trous correspondants à l'arrière de la base et qui forment axe de pivotement du couvercle par rapport à la base. Ceci permet de fermer le couvercle ou de l'ouvrir à 180°.

Les parois latérales du couvercle comportent six petites extensions vers l'intérieur en demi-lunes (trois par côté) laissant un certain interstice entre elles et la paroi supérieure du couvercle ce qui permet de glisser le long de cette paroi un livret avec page de couverture illustrée concernant le disque et de l'y maintenir. A l'arrière, le livret bute contre une paroi arrière de l'épaisseur du livret. A l'avant le livret est arrêté par deux petites protubérances.

Les parois latérales de la base sont en retrait, de l'épaisseur des parois latérales du couvercle. Ainsi, lorsqu'on ferme le boîtier, ces dernières viennent se poser sur les bords du fond de la base et enferment les parois latérales de la base à leur intérieur. En même temps, le couvercle, démuni de paroi avant, se pose sur le bord de la paroi avant de la base.

Le porte-disque, également rectangulaire, comporte, le long de son bord arrière, une bande surélevée qui, lorsque le coffret est fermé, est disposée dans le même plan que la paroi supérieure du couvercle. Le porte-disque comporte des plages surélevées aux quatre coins et un logement circulaire en contrebas. La surface de ce logement est prévue pour abriter le disque. Au centre, il y a un trou correspondant au trou central du disque. Concentrique à ce trou, se trouve un petit disque légèrement rehaussé qui constitue une surface d'appui pour la zone circulaire intérieure du disque dépourvue d'information. De cette manière, toute la zone contenant des informations flotte librement dans le logement circulaire du porte-disque, évitant tout contact ou frottement des enregistrements du disque avec l'emballage. Autour du trou central se trouvent des segments découpés comportant des crochets qui tiennent le bord du trou du disque avec déclic.

Malgré la haute densité d'information enregistrée sur les disques audionumériques, qui permet une écoute dépassant une heure, certaines oeuvres dépassent ce temps. De là, le besoin de coffrets qui permettent de ranger plusieurs disques dans le même emballage.

Le brevet européen n° 114631 décrit un tel coffret. Ce coffret comporte deux bases, avec leur porte-disque, identiques à celle de la cassette monodisque décrite ci-dessus, qui s'articulent sur une pièce médiane nouvelle. L'ensemble forme un coffret d'une épaisseur double de la cassette monodisque. Dans ce coffret, chacune des bases avec son porte-disque peut porter un disque et la pièce médiane peut, en plus, porter un disque supplémentaire sur une ou les deux faces. Le coffret peut donc contenir deux à quatre disques. Les deux bases, identiques à la base décrite plus haut, ne nécessitent plus de description. Elles ne diffèrent que par leur fonction, qui devient dans le coffret couvercle au lieu de base.

La pièce médiane comporte une plaque rectangulaire presque carrée, et deux parois latérales, de deux fois la hauteur de la paroi latérale du couvercle de la cassette monodisque. Les parois latérales de la pièce médiane s'étendent vers l'arrière formant branches élastiques, munies de deux tourillons par côté. Ceux-ci s'engagent chacun dans un trou à l'arrière d'une base et forment axe de pivotement pour ces bases (devenues couvercles).

La pièce médiane est munie d'une bande profilée à l'avant, de hauteur inférieure à celle des parois latérales. Les bords de cette bande forment surface d'appui pour les bords d'about des couvercles. A l'arrière il y a également une bande profilée semblable à celle du devant.

La plaque rectangulaire de la pièce médiane comporte quatre ouvertures semi-circulaires aux coins, qui représentent une économie de matière et servent à l'insertion des doigts pour saisir les disques, les insérer ou les extraire. Au centre il y a un trou. Si le coffret est destiné à recevoir trois ou quatre disques, on insère dans ce trou une pièce surélevée d'appui avec segments et crochets pour tenir un disque supplémentaire sur une ou les deux faces. La pièce surélevée d'appui, les segments et les crochets sont semblables aux pièces analogues de la cassette monodisque et remplissent les mêmes fonctions.

Le coffret multidisques du brevet EP 114631 est donc prévu pour les enregistrements dont le temps d'écoute dépasse celui d'un seul disque compact. L'expérience pratique a cependant montré que dans 70% des cas, le coffret ne contient que deux disques compacts. L'emballage limité à deux disques dans le coffret décrit ci-dessus entraîne des coûts et des volumes relativement élevés par rapport au coût et volume des disques offerts. De plus, l'épaisseur de ce coffret ne permet pas de le ranger dans les rangements classiques munis de compartiments de l'épaisseur des cassettes monodisques. Enfin, sa fabrication implique au moins cinq composants, à savoir les deux couvercles, les deux porte-disque qui y sont insérés et la pièce médiane qui permet l'articulation du tout. A la production, la fabrication de ce coffret nécessite le double de temps de fabrication de la cassette monodisque.

Le brevet européen n° 420350 a tenté de remédier à ces inconvénients en proposant un coffret pour deux disques qui a les mêmes dimensions que la cassette monodisque classique et qui comporte un nombre réduit de pièces et de moules, ce qui représente une économie non négligeable à la fabrication.

Ce brevet décrit un coffret constitué d'un porte-disques rectangulaire médian muni d'un couvercle pour chaque face. Ces couvercles s'articulent au moyen de tourillons et trous sur deux côtés diagonalement opposés du porte-disques, de sorte que l'ensemble s'ouvre en zigzag.

La pièce médiane porte-disques comporte une plaque rectangulaire et deux parois latérales. A l'avant et à l'arrière, la plaque est légèrement surélevé en quinconce pour libérer une surface d'articulation pour chaque couvercle. La plaque entre ces rehaussements comporte des découpes semi-circulaires aux quatre coins. Ces découpes, qui peuvent être partiellement bouchées par paires opposées, permettent de saisir les disques, les placer ou les extraire. Au centre, sur chaque face, une partie circulaire plus épaisse sert de support pour la zone sans enregistrement des disques. Cette partie projette vers le trou central des segments qui portent des dents dressées alternativement vers l'un ou l'autre couvercle. Elles sont destinées à fixer ou relâcher, avec déclic, les disques qu'on y pose ou qu'on enlève.

Les couvercles comportent chacun une paroi supérieure rectangulaire avec deux parois latérales. Le fond est replié en C à l'arrière. Les parois latérales comportent chacune deux bandes incurvées vers l'intérieur laissant des interstices permettant d'y glisser une feuille de titre ou un livret avec page de couverture illustrée. La feuille s'étend en arrière, se replie et indique ainsi le titre du disque sur la tranche également. La même chose se fait sous l'autre couvercle pour le disque qui s'y trouve. Ainsi le coffret contient deux faces imprimées différemment selon les disques qu'il contient.

Le coffret du brevet EP 420 350 présente cependant l'inconvénient qu'il s'ouvre en zigzag avec des axes de pivotement sur deux faces opposées. Ceci est peu commode par rapport aux coffrets précédents qui s'ouvrent comme un livre avec axes de pivotement du même côté et sur la même face. Dans le cas du brevet EP 420 350, on risque de tourner le coffret dans tous les sens à la recherche de l'ouverture appropriée pour le disque demandé. En outre, lorsqu'on ouvre un couvercle et qu'on désire extraire le disque en insérant les doigts dans les ouvertures semi-circulaires, la pression des doigts risque d'exercer une pression sur le disque de l'autre face et sur son couvercle provoquant la chute du disque et le risque de l'abîmer. D'ailleurs, ce coffret ne peut pas être fabriqué sur les chaînes classiques des cassettes monodisques ni sur les machines d'assemblage classiques. Ces dernières doivent poser des disques sur la pièce médiane porte-disques. Or, ils sont gênés par les couvercles qui s'ouvrent en zigzag et qui exigeraient des machines d'assemblage à la verticale. De plus, le système de tenon de ce brevet ne tient pas les disques suffisamment fort pour que la pose d'un disque n'empêche la chute de l'autre. D'ailleurs, le porte-disques est peu approprié à l'empilage, ni durant la fabrication ni durant l'assemblage. Ceci vaut également pour les machines d'introduction des feuilles de titre et des livrets, étant donné qu'il faut deux feuilles de titre différentes pour les deux faces en zigzag. De plus, ces feuilles ont un autre type de pliage que les feuilles de titre classiques des cassettes monodisques.

La demande de brevet européen n° 430 956 qui reflète au mieux l'objet du préambule de la revendication 1, décrit un coffret pour deux disques comportant une base, un couvercle et un plateau porte-disques. La base et le couvercle sont semblables à ceux des cassettes monodisques décrites ci-dessus. Le plateau porte-disques comporte une plaque rectangulaire, presque carrée et une bande surélevée de même fonction que celle du plateau de la cassette monodisque classique. Le plateau pivote le long d'un axe situé le long de la paroi de la base (appelée paroi frontale), opposée à celle (appelée paroi arrière) le long de laquelle pivote le couvercle, le plateau et le couvercle pivotant sur la même face de la base. Le plateau porte-disques est muni d'un système de tenon semblable à celui décrit dans le brevet EP 420 350.

Le coffret décrit dans la demande de brevet EP 430 956 présente cependant de nombreux inconvénients. La disposition de l'axe de pivotement du plateau porte-disques ne permet pas de l'ouvrir complètement, c'est-à-dire à 180°. De ce fait, l'ensemble du coffret et plus particulièrement le plateau, sont dans une position peu stable lorsqu'on désire retirer ou placer le disque porté par la face inférieure du plateau. Un autre inconvénient de ce coffret est que les plateaux ne peuvent être empilés les uns sur les autres d'une manière stable, ce qui empêche la fabrication automatisée ainsi que l'assemblage automatisé de l'ensemble des pièces du coffret.

La présente invention tend à remédier aux défauts des coffrets connus. Elle propose un coffret de rangement pour support d'information en forme de disque à haute densité d'enregistrement, connu sous la dénomination de compact discs, et plus particulièrement pour le rangement d'un nombre de disques allant de 1 à 6.

Il est notamment visé de fournir un coffret pour le rangement de un ou de deux disques, lequel coffret a les mêmes dimensions extérieures que les cassettes monodisques classiques ou de fournir un coffret pour le rangement de 1 à 6 disques, lequel coffret a les mêmes dimensions extérieures que celles des coffrets multi-pack permettant le rangement de 1 à 4 disques.

Un des buts de l'invention est notamment de fournir un coffret qui puisse être fabriqué et monté sur les chaînes classiques utilisées, pour les cassettes monodisques connues ou pour les coffrets multi-pack connus. Il est notamment visé que la fabrication et l'assemblage du coffret suivant l'invention puisse être effectué de manière complètement automatisée. En particulier, les plateaux porte-disque doivent être empilables les uns sur les autres de manière stable, cet empilement devant également être possible lorsque les plateaux portent le ou les disque(s). Ceci est important tout au long des étapes de fabrication et d'assemblage des pièces. Il est, de plus, visé que l'empilement des plateaux puisse être légèrement réajusté dans le sens latéral, comme dans le sens antéro-postérieur, et ceci de manière complètement automatisée. En outre, le plateau porte-disque, muni du ou des disques, doit pouvoir être mis en place dans la base de manière automatisée.

Un autre but de l'invention est de fournir un coffret comportant une ou deux bases universelles et pouvant contenir, au choix, un ou deux plateaux, ces plateaux étant aptes à porter un disque ou aptes à porter deux disques compacts. Ces plateaux sont interchangeables.

Un autre but de l'invention est aussi de fournir un coffret pour au moins un disque, de qualité, mais peu coûteux, en ce sens qu'il comporte un minimum de pièces différentes à mouler.

La présente invention a encore pour but de fournir un coffret dont le plateau est muni d'un système de fixation procurant une bonne tenue des disques, sans risque notamment, qu'un disque ne tombe lorsqu'on extrait l'autre du système de fixation, dans le cas où le plateau porte deux disques. Il est encore visé de fournir un coffret dont le/les système(s) de fixation soit(ent) très flexible(s) et donc souple(s). Ce système de fixation permet la pose et le retrait des disques d'une manière pratique, simple et sûre.

La présente invention a donc pour objet un coffret pour au moins un disque à haute densité d'information constitué d'un boîtier et d'un plateau porte-disque, le boîtier étant formé d'une base et d'un dispositif pivotant.

La base comporte un fond plat rectangulaire, deux parois latérales près des côtés les plus longs du fond et, une paroi frontale et une paroi dorsale près des côtés les plus courts du fond.

Le plateau porte-disque comporte une plaque en substance rectangulaire apte à être disposée dans la base du boîtier. Les bords de cette plaque situés respectivement à proximité des parois latérales, frontale et dorsale sont appelés bords latéraux, frontal et dorsal. Le bord dorsal de ladite plaque porte une bande décalée vers le haut. Ladite plaque comporte au centre, sur au moins une de ses deux faces, un système de tenons adapté au diamètre du trou central du disque, pour le maintien de celui-ci.

Le dispositif pivotant comporte des parois latérales de longueur sensiblement égale à celle des parois latérales de la base et est apte à se rabattre sur la base et le plateau, le plateau étant disposé entre la base et ledit dispositif.

Une échancrure est ménagée dans la zone centrale de chacune des parois latérales de la base et du dispositif pivotant du coffret suivant l'invention. Le plateau porte-disque présente des saillies latérales aux endroits qui correspondent à ces échancrures et porte des nervures de renforcement latérales sur au moins une face le long de ses bords latéraux. Les saillies latérales et les nervures qu'elles portent s'ajustent dans les échancrures lorsque le boîtier est fermé.

Avantageusement, les échancrures ménagées dans les parois latérales de la base laissent subsister des nervures de renforcement.

Suivant un premier mode d'exécution de l'invention, le dispositif pivotant fait office de couvercle et comporte une paroi supérieure plane rectangulaire dont le côté frontal et le côté arrière ont une longueur sensiblement égale aux côtés les plus courts du fond rectangulaire de la base et dont les côtés latéraux sont plus courts que les côtés les plus longs du fond rectangulaire de la base, lesdites parois latérales s'étendant vers l'arrière au-delà du côté arrière de la paroi supérieure en y formant par leur extrémité libre des branches pour le montage pivotant du couvercle sur la base, à proximité de l'extrémité arrière des parois latérales de cette base. Ladite bande décalée vers le haut est, lorsque le boîtier est fermé, disposée sensiblement dans le même plan que la paroi supérieure du couvercle.

Avantageusement, les échancrures ménagées dans les parois latérales du couvercle laissent subsister des nervures de renforcement.

Suivant un deuxième mode d'exécution du coffret suivant l'invention, celui-ci comporte deux bases, deux plateaux porte-disque et une pièce médiane. Celle-ci comporte une plaque rectangulaire, dont le côté frontal et le côté arrière ont une longueur sensiblement égale aux côtés les plus courts du fond rectangulaire de la base et dont les côtés latéraux sont plus courts que les côtés les plus longs dudit fond. Les parois latérales de cette plaque s'étendent de part et d'autre de la plaque rectangulaire et s'étendent vers l'arrière au-delà du côté arrière de la plaque rectangulaire en y formant par leur extrémité libre des branches pour le montage pivotant des deux bases. Les branches comportent chacune deux tourillons aptes à s'insérer dans des trous correspondants ménagés à proximité de l'extrémité arrière des parois latérales des bases, de telle sorte que chacune des deux bases est apte à s'emboîter de part et d'autre de la plaque rectangulaire et apte à s'articuler à plus de 180°. Les deux axes de pivotement sont disposés à proximité des extrémités arrière des parois latérales de la pièce médiane. Deux échancrures sont ménagées dans chacune des parois latérales de la pièce médiane dans la zone correspondant à l'endroit où les saillies latérales du plateau et les nervures portées par lesdites saillies viennent s'ajuster, lorsque le boîtier est fermé. Une bande subsiste entre les échancrures d'une même paroi latérale.

De manière particulière, la pièce médiane comporte d'un ou des deux côtés de la plaque un système de tenon adapté au diamètre du trou central du disque et nervure circulaire concentrique, pour le support d'un ou deux disque(s) supplémentaire(s).

De préférence, le plateau porte-disque porte une nervure de renforcement sur au moins une face le long de son bord frontal.

De façon avantageuse, le plateau porte-disque porte une nervure de renforcement sur chacune de ses faces le long de son bord frontal. La nervure inférieure est, par rapport à la nervure supérieure, décalée vers le centre de ce plateau sur une distance qui correspond sensiblement à l'épaisseur de ces nervures, en sorte que lorsque deux plateaux porte-disque sont superposés à la verticale l'un de l'autre, la nervure inférieure du plateau supérieur peut passer à côté de la nervure supérieure du plateau inférieur.

Suivant une forme de réalisation préférée, la nervure de renforcement supérieure portée par la face supérieure du plateau porte-disque le long de son bord frontal, porte des protubérances qui, lorsque deux plateaux porte-disque sont superposés à la verticale l'un de l'autre, servent d'arrêtoirs pour la nervure inférieure du plateau supérieur.

Avantageusement, dans la nervure de renforcement inférieure est ménagée au moins une encoche qui, lorsque deux plateaux porte-disque sont superposés, est apte à recevoir une desdites protubérances empêchant ainsi un glissement latéral des deux plateaux superposés, l'un par rapport à l'autre.

Suivant une réalisation préférée de l'invention, la plaque du plateau porte-disque porte le long de son bord dorsal une nervure de renforcement dirigée vers le fond de la base.

D'une manière avantageuse, la plaque du plateau porte-disque présente à proximité de ses quatre coins des découpes aptes à faciliter la préhension du disque porté par le plateau porte-disque.

Suivant une forme de réalisation, le/les système(s) de tenon dont est pourvu le plateau porte-disque comporte(nt) une couronne de dents apte à être engagée dans le trou central du disque et à serrer contre la paroi de ce trou.

Suivant une autre forme de réalisation, le système de tenon dont est pourvu le plateau porte-disque comporte un anneau central, relié au plateau par des rayons. Le système de tenon comporte aussi des crochets s'étendant de l'anneau vers l'extérieur du plateau. Ces crochets présentent un profil de verrouillage élastique.

Préférentiellement, le système de tenon est entouré d'une nervure circulaire concentrique apte à servir d'appui au disque dans sa zone centrale dépourvue de pistes d'information.

Suivant une forme particulière de réalisation de l'invention, le plateau porte-disque comporte, dans l'encoignure formée par les nervures latérales et la plaque, des ailettes s'étendant vers le centre du plateau, perpendiculairement à ses bords latéraux. Ces ailettes comportent un bord libre oblique s'étendant de la plaque à un plan horizontal passant par le bord libre supérieur des nervure latérales.

D'une manière particulière, les nervures de renforcement latérales du plateau portent sur leur face supérieure, à proximité du bord frontal du plateau, une protubérance dont le bord libre supérieur est situé dans le même plan horizontal que le bord libre supérieur des nervures latérales centrales.

Avantageusement, le plateau comporte, dans l'encoignure de ladite protubérance et de la plaque rectangulaire, une ailette s'étendant perpendiculairement aux bords latéraux du plateau, vers le centre de celui-ci. Cette ailette est légèrement plus haute que la protubérance et constitue une butée empêchant le glissement latéral des plateaux empilés les uns au-dessus des autres.

Suivant une forme d'exécution préférée de l'invention, le plateau porte-disques est muni d'un système de tenon et d'une nervure circulaire concentrique sur chacune de ses deux faces de telle sorte que ledit plateau est apte à porter deux disques.

Avantageusement, le plateau porte-disques est apte à pivoter suivant un axe situé le long d'une des parois de la base. Le plateau comporte alors deux tourillons aptes à s'insérer dans des ouvertures correspondantes ménagées dans les parois de la base.

Il est entendu que l'inverse est également possible. Les tourillons peuvent être portés par les parois de la base et s'insérer dans des ouvertures correspondantes ménagées dans le plateau.

En particulier, le plateau porte-disque est apte à pivoter suivant un axe situé le long de la paroi frontale de la base. Les nervures supérieures portées par le bord frontal du plateau portent, à leurs extrémités latérales, un tourillon dirigé latéralement, apte à s'insérer dans des ouvertures correspondantes ménagées dans les parois latérales de la base près de la paroi frontale.

Avantageusement, lesdites ouvertures ménagées dans les parois latérales de la base près de la paroi frontale sont ménagées dans une partie rehaussée de ces parois. Le plateau porte-disque comporte, avantageusement, une gorge le long de son bord frontal. Ainsi, le plateau est apte à pivoter de plus de 180° autour de l'axe de pivotement situé près de la paroi frontale de la base.

Dans une forme de réalisation particulière, deux entailles sont ménagées dans la nervure supérieure portée par le bord frontal du plateau, à proximité de ses bords latéraux, en sorte que le bord frontal du plateau possède suffisamment de souplesse pour que les tourillons puissent être insérés dans les ouvertures correspondantes de la base.

Suivant une autre forme de réalisation de l'invention, le plateau porte-disque est pourvu, sur sa face supérieure uniquement, d'un système de tenon et d'une nervure circulaire concentrique, en sorte que le plateau est apte à recevoir un seul disque.

Le plateau porte-disque comporte alors, sur ses bords latéraux, des protubérances d'ancrage dirigées latéralement et aptes à s'engager dans des ouvertures ou encoches correspondantes ménagées dans les parois latérales de la base, en sorte que le plateau est apte à être inséré et maintenu dans la base.

Avantageusement, des découpes allongées sont ménagées le long des bords latéraux du plateau porte-disque, au niveau des protubérances d'ancrage, de manière à faciliter l'insertion du plateau dans la base.

D'une manière préférée, le plateau porte-disque comporte, sur sa face inférieure, un organe d'appui disposé dans la zone centrale de la plaque du plateau, de manière à empêcher l'écrasement du plateau contre le fond de la base.

L'invention sera maintenant illustrée par une forme préférentielle de réalisation du coffret avec référence aux dessins annexés, dans lesquels :
la Fig. 1 est une vue d'ensemble latérale du coffret ouvert selon une première forme de réalisation de l'invention avec un plateau apte à recevoir 2 disques;
la Fig. 2 est une perspective, en éclaté, des 3 pièces principales du coffret représenté à la Fig. 1;
la Fig. 3 est une vue latérale de la base;
la Fig. 4 est une vue latérale du couvercle;
la Fig. 5 est une vue en plan du plateau apte à porter deux disques, vu de dessus;
la Fig. 6 est une vue en plan du même plateau porte-disques, vu de dessous;
la Fig. 7 est une coupe du plateau porte-disques suivant la ligne VII-VII de la Fig. 5;
la Fig. 8 est vue latérale d'une coupe du coffret fermé renfermant le plateau porte-disques;
la Fig. 9 est une coupe partielle agrandie de l'articulation du plateau sur la base, le plateau étant ouvert à plus de 180°;
la Fig. 10 est une coupe partielle agrandie de l'extrémité avant de deux plateaux empilés;
la Fig. 11 est une coupe partielle agrandie du centre du plateau montrant le système de tenons selon la ligne XI-XI de la Fig. 5;
la Fig. 12 est une vue frontale d'une coupe du coffret complet fermé;
la Fig. 13 est une vue analogue à celle de la Fig. 5 mais d'une autre forme de réalisation de l'invention où le plateau est destiné à ne recevoir qu'un seul disque, et
la Fig. 14 est une coupe partielle agrandie du centre du plateau suivant la ligne XIV-XIV de la Fig. 13;
la Fig. 15 est une vue en élévation du coffret ouvert selon une seconde forme de réalisation de l'invention;
la Fig. 16 est une vue latérale du même coffret, fermé;
la Fig. 17 est une coupe vue latéralement du coffret tel que représenté à la Fig. 16;
la Fig. 18 est une vue en plan, agrandie, d'une variante de réalisation du système de tenon, et
la Fig. 19 est une coupe suivant la ligne XIX-XIX de la Fig. 18.

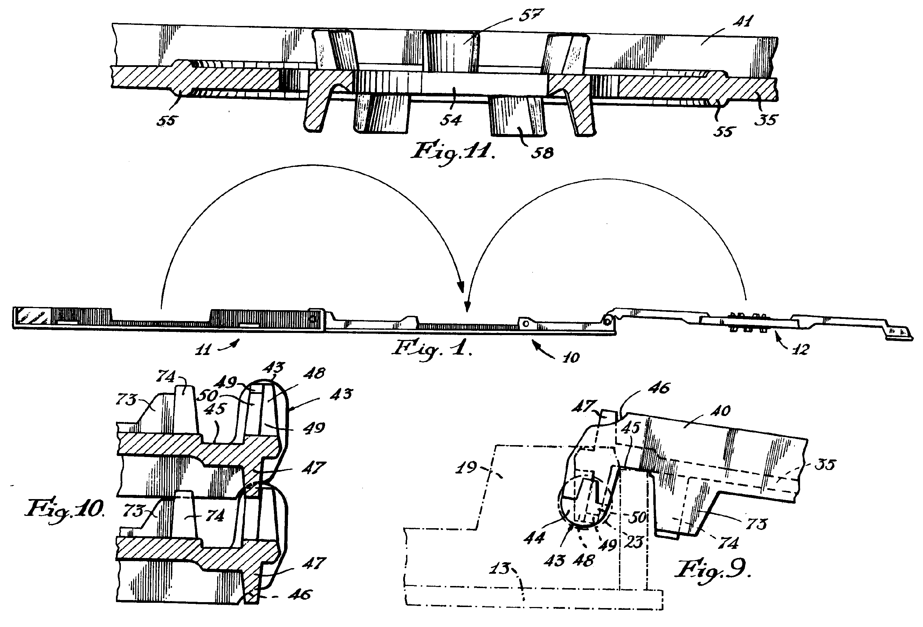

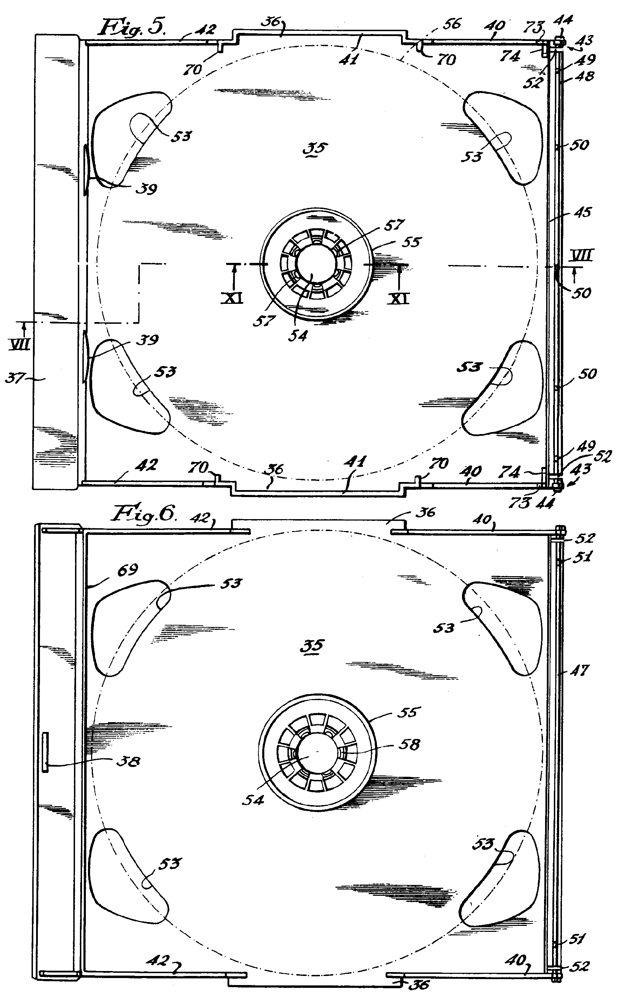

Suivant un premier mode d'exécution de l'invention, représenté aux Fig. 1 à 14, le coffret comporte trois pièces principales : la base 10, le dispositif pivotant appelé couvercle 11, et le plateau porte-disques 12. Le plateau 12 s'articule sur le devant de la base 10 et se rabat vers l'intérieur de celle-ci, tandis que le couvercle 11 s'articule sur l'arrière de la base 10 et se rabat sur le plateau 12 inséré dans la base 10 (voir Fig. 1).

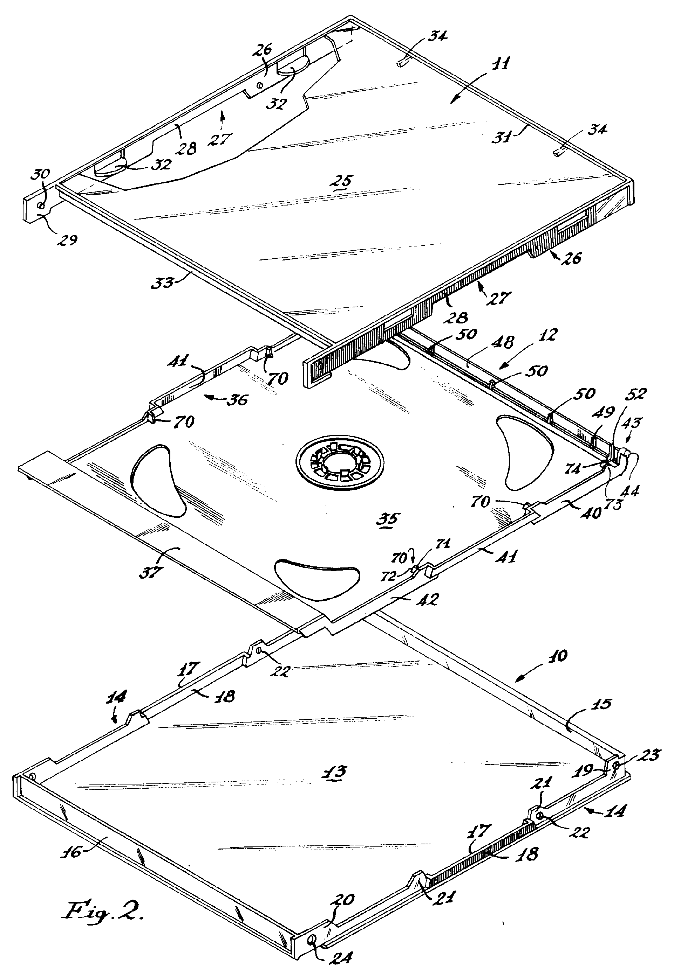

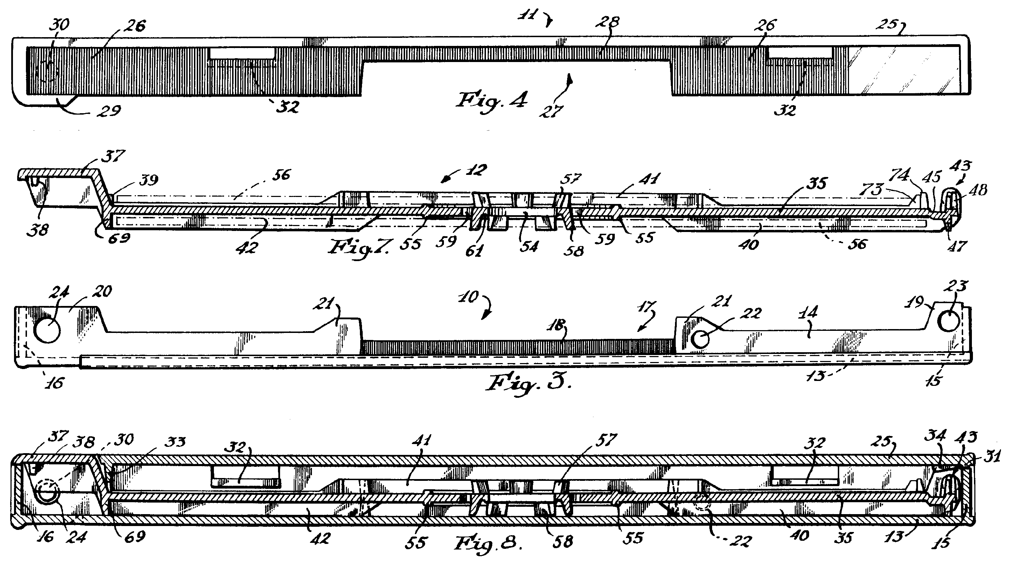

La base 10, représentée aux Fig. 2 et 3, comporte un fond plat rectangulaire 13, deux parois latérales 14, une paroi frontale 15 et une paroi dorsale 16. Les parois latérales 14 présentent, dans leur zone centrale, des échancrures 17. Le long de ces échancrures 17 subsiste une nervure de renforcement 18 moins élevée qui chevauche à l'extérieur de chaque paroi latérale 14. A leurs extrémités avant 19 et arrière 20 et à côté 21 de l'échancrure 17, les parois latérales 14 sont rehaussées. Les rehaussements 21 à côté de la nervure 18 sont inclinés vers le milieu pour plus de stabilité. Le rehaussement médian avant 21 comporte une ouverture 22 avec entaille de guidage pour l'introduction d'une protubérance du couvercle 11 pour le retenir rabattu sur la base 10. Les rehaussements avant 19 comportent des ouvertures d'articulation 23 avec entaille conique de guidage pour l'insertion des tourillons du porte-disques 12 permettant le pivotement de celui-ci. D'autre part, les rehaussements arrière 20 comportent également des ouvertures d'articulation 24 avec entailles coniques de guidage pour l'insertion des tourillons du couvercle 11 permettant le pivotement de celui-ci. Sur le fond 13 de la base 10, on peut poser une feuille de titre illustrée, qui est repliée à l'avant et à l'arrière, pour laisser paraître le titre en petit sur les tranches 15, 16 du coffret. Pour protéger ces tranches 15, 16 des griffes, elles sont légèrement en retrait vers le centre du coffret. La paroi frontale 15 est moins élevée que la paroi dorsale 16 pour faciliter l'articulation du plateau 12 à au moins 180°.

Le couvercle 11, représenté aux Fig. 2 et 4, comporte une paroi supérieure plane rectangulaire 25, presque carrée, car sa longueur est plus courte que celle de la base 10. C'est-à-dire que ses côtés frontal et dorsal ont la même longueur que les côtés frontal et dorsal du fond 13 de la base 10 et ses côtés latéraux sont plus courts que les côtés latéraux dudit fond 13. Le couvercle 11 comporte deux parois latérales 26 dans la zone centrale desquelles est ménagée une échancrure 27, une nervure de renforcement 28 subsistant. Les parois latérales 26 s'étendent en arrière au-delà de la paroi supérieure 25 du couvercle 11 pour égaliser la longueur des parois latérales 14 de la base 10. Ces extensions forment des branches 29 et sont munies de tourillons 30 destinés à s'insérer dans les ouvertures d'articulation 24 de l'arrière rehaussé 20 de la paroi latérale 14 de la base 10. Pour pouvoir fermer le coffret, les parois latérales 14 de la base 10 sont légèrement en retrait vers l'intérieur sur le fond 13. Ainsi, les parois latérales 26 du couvercle 11 enferment celles 14 de la base 10 et en même temps reposent sur le petit bord du fond 13 de la base 10 libéré par le retrait de ses parois 14. Le bord frontal du couvercle 11 comporte une petite bande 31 peu élevée en guise de paroi frontale. Cette petite paroi frontale 31 du couvercle 11 repose sur le bord supérieur de la paroi frontale 15 de la base 10. Le couvercle 11 comporte des cales 32 s'étendant vers l'intérieur parallèlement au fond 13 et qui laissent un certain interstice libre dans lequel on peut glisser un livret avec page de couverture illustrée. Ce livret est arrêté à l'arrière par une bande 33 de même épaisseur en guise de paroi arrière. A l'avant il est arrêté par des petites protubérances coniques 34.

Le plateau porte-disques 12, représenté aux Fig. 2, 5, 6 et 7, comporte une plaque rectangulaire 35. Celle-ci comporte un bord dorsal, un bord frontal et deux bords latéraux. Les bords latéraux présentent dans la zone médiane une saillie latérale 36. En position fermée du coffret, ces saillies 36 s'insèrent dans les échancrures 17, 27 des parois latérales 14, 26 de la base 10 et du couvercle 11. L'arrière de la plaque 35 comporte une bande décalée vers le haut 37 qui, en position fermée du coffret, se pose sur le bord supérieur de la paroi dorsale 16 de la base 10. La position de cette bande 37 libère l'articulation 24-30 du couvercle 11. Pour empêcher l'affaissement de cette bande 37 lorsque plusieurs plateaux 12 sont empilés, affaissement dû par exemple à une pression de doigts au milieu, cette bande 37 comporte au milieu de la face tournée vers la base 10 un pied 38 et éventuellement des cales verticales supplémentaires. La bande 37 comporte également deux petites cales horizontales 39 pour empêcher l'affaissement du bord arrière du couvercle 11, lorsque le coffret est fermé.

Le plateau porte-disques 12 comporte des nervures de renforcement verticales 40, 41, 42. Les nervures avant 40 et arrière 42 s'étendent vers la base 10 (en position fermée) alors que la nervure 41 se dresse vers le couvercle 11 et suit le bord de la saillie latérale 36 de la plaque 35. Cette disposition des nervures de renforcement 40, 41, 42 représente un renforcement considérable de l'ensemble du plateau 12, lui donnant une rigidité propre suffisante et une résistance à la flexion. Ceci permet la fabrication de la plaque 35 du plateau 12 à partir d'une feuille plus mince. Par exemple, cette feuille peut avoir une épaisseur de 1,2 mm par comparaison aux plaques de l'état de la technique qui auraient une épaisseur de 1,5 mm, ce qui représente un gain en matière d'environ 20%. De plus, l'économie en épaisseur libère de l'espace pour caser deux disques.

Le bord frontal du plateau 12 est également renforcé, notamment par une nervure 47 (inférieure) dirigée vers la base 10 et par une nervure 48 (supérieure) dirigée vers le couvercle 11. La nervure inférieure 47 est, par rapport à la nervure supérieure 48, décalée vers le centre du plateau sur une distance qui correspond sensiblement à l'épaisseur de ces nervures 47, 48, de sorte que, à l'empilage, la nervure inférieure 47 du plateau 12 au-dessus passe à côté de la nervure supérieure 48 du plateau 12 au-dessous.

La nervure supérieure 48 porte des petites protubérances 49, 50 verticales disposées vers le centre du plateau 12, servant d'arrêtoirs pour la nervure inférieure 47 du plateau 12 empilés au-dessus (voir Fig. 10). Les deux protubérances 49 situées vers les extrémités latérales du plateau 12 ont la même hauteur que la nervure 48, alors que les autres protubérances 50 ont une hauteur inférieure. La nervure inférieure 47 comporte, près de chaque extrémité latérale, une encoche 51 apte à recevoir, lorsque deux plateau 12 sont superposés, les protubérances 49 de la nervure supérieure 48 du plateau 12 en-dessous. Cette disposition encoche 51-protubérance 49 empêche le glissement latéral des plateaux superposés.

La nervure frontale supérieure 48 présente à ses extrémités latérales de petits élargissements 43, dont le bord supérieur est arrondi. Ces élargissements 43 portent des tourillons 44 en forme de champignon destinés à s'insérer dans les ouvertures 23 de la partie surélevée 19 de la paroi latérale 14 de la base 10. L'ensemble tourillon 44-ouverture 23 forme ainsi axe de pivotement pour le plateau 12, lui permettant de s'insérer dans la base 10 ou de pivoter à plus de 180°.

Pour faciliter ce pivotement à plus de 180°, une gorge 45 est ménagée le long du bord frontal de la plaque 35, de telle sorte que le plateau 12 peut passer au-dessus de la paroi frontale 15 de la base 10, lors de son pivotement (voir Fig. 9).

A l'extrémité avant inférieure de la nervure latérale avant 40 est ménagée une encoche arrondie 46. Celle-ci est apte à recevoir, lorsque deux plateaux 12 sont superposés, l'extrémité supérieure arrondie de l'élargissement 43 de la nervure 48 d'un plateau 12 en dessous (voir Fig. 10).

Dans la nervure frontale supérieure 48, à proximité de ses extrémités latérales, sont ménagées deux entailles 52 (visibles sur les Fig. 5, 6 et 12) permettant un léger pliage du bord frontal du plateau 12 afin de pouvoir insérer les tourillons 44 dans les ouvertures 23 correspondantes de la base 10. Ces entailles 52 peuvent également se prolonger dans la plaque 35 du plateau 12.

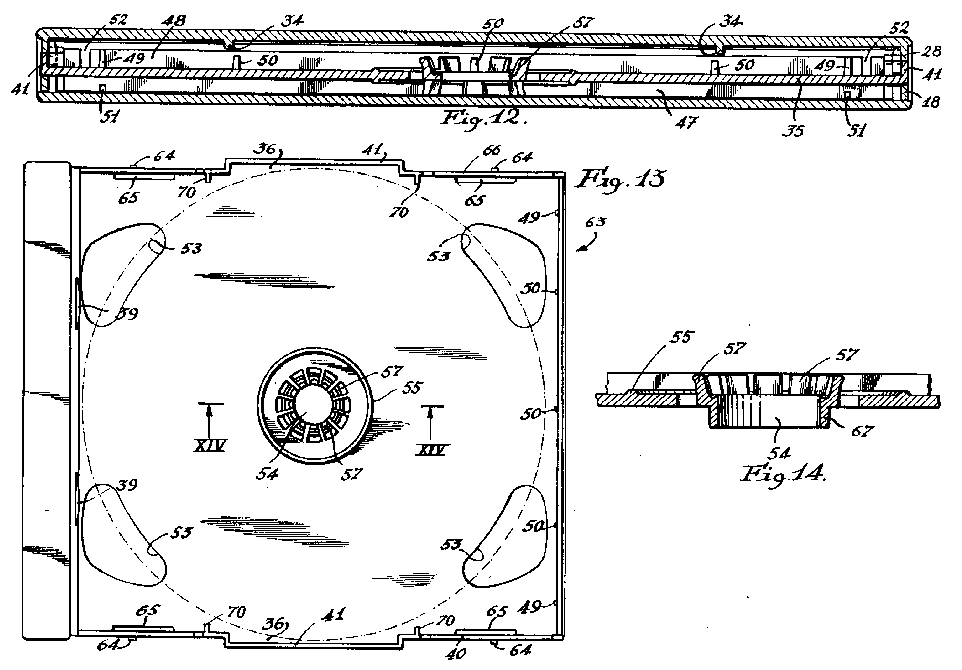

En outre, le bord dorsal du plateau 12 est renforcé par une nervure verticale 69 (Fig. 7). L'ensemble des nervures de renforcement des bords du plateau 12 lui confèrent une bonne résistance à la flexion.

Aux Fig. 2 et 5 on peut voir des ailettes 70 disposées dans l'encoignure formée par la plaque 35 et les nervures latérales 41 portée par la partie centrale des bords latéraux du plateau 12. Ces ailettes 70 s'étendent vers le centre du plateau 12, perpendiculairement à ces bords latéraux. Elles comportent un bord libre horizontal 71 situé dans le même plan que le bord libre supérieur des nervures latérales centrales 41 et un bord libre oblique 72 s'étendant du bord libre horizontal 71 à la plaque 35 du plateau 12.

Ces ailettes 70 ont pour but de faciliter le repositionnement de deux plateaux 12 qui se seraient empilés avec un décalage latéral. En effet, une simple pression latérale sur le plateau 12 décalé latéralement, permet au bord inférieur des nervures latérales 40, 42 du plateau 12 au-dessus de longer la pente oblique 72 des ailettes 70 du plateau 12 en dessous et de se repositionner correctement sur le bord supérieur des nervures latérales centrales 41 du plateau 12 en dessous. Sans ces ailettes 70, les nervures latérales 40, 42 du plateau 12 au-dessus viendraient buter contre les nervures latérales 41 du plateau 12 en dessous.

Aux Fig. 5, 7 et 10, on peut voir que les nervures latérales avant 40 portent, sur leur face supérieure, à proximité du bord frontal du plateau 12 une protubérance 73. Le bord supérieur de cette protubérance 73 est situé dans le même plan horizontal que le bord supérieur de la nervure latérale centrale 41.

Dans l'encoignure formée par cette protubérance 73 et la plaque 35, une ailette 74 s'étend vers le centre du plateau 12 perpendiculairement à ces bords latéraux. Cette ailette 74 est de forme semblable à celle des ailettes 70 mais son bord supérieur est situé légèrement plus haut que le bord supérieur de la protubérance 73. L'ailette 74 constitue donc une petite butée latérale pour la nervure latérale avant 40 du plateau 12 au-dessus et empêche le glissement latéral des plateaux 12 empilés les uns au-dessus des autres.

La disposition des nervures de renforcement frontales 47, 48, l'insertion de la partie supérieure des élargissements 43 dans l'encoche 46 correspondante, l'insertion des protubérances 49 dans les encoches 51 correspondantes, les ailettes 70 et la butée formée par l'ailette 74 permettent l'empilage aisé et stable des plateaux porte-disques 12,63. Ceci est très important tout le long de la fabrication et de l'assemblage des pièces. En effet, les machines de fabrication fabriquent les boîtiers (base 10 + couvercle 11) et les assemblent, d'une part, et fabriquent les plateaux porte-disques 12,63 séparément, d'autre part. Ces derniers sont empilés et envoyés aux fabricants de disques compacts. Là, les machines insèrent les disques sur les plateaux, transfèrent les plateaux munis de leurs disques vers les chaînes d'assemblage où ces plateaux ainsi que les feuilles de titre et les livrets sont introduits automatiquement dans les boîtiers. Pendant tous les voyages ou transferts entre machines et lieux de manipulation, il importe que les disques soient insérés et protégés par les plateaux pour éviter toute détérioration de ces disques. De là, l'importance de l'empilage stable. Pour le favoriser encore plus, on peut munir la nervure frontale inférieure 47 de trois excroissances en forme de croix, et passer, lors de l'empilage, un doigt dans le trou central des plateaux 12,63.

D'autres dispositions pourraient également assurer un empilement stable, sans sortir du contexte de l'invention.

Aux quatre coins du fond 35 du plateau 12,63 sont aménagées des découpes de préhension 53 pour permettre l'insertion des doigts pour la saisie des disques, ce qui représente en même temps une économie de matière.

Il est à noter que la forme des découpes de préhension 53 importe peu, pour autant qu'elles permettent le passage d'un doigt.

Au centre, le plateau 12 comporte un trou 54 et, concentrique à celui-ci, chaque face comporte au moins une nervure circulaire 55 qui sert de surface d'appui rehaussé pour la partie non enregistrée du disque 56, ce qui permet à la partie enregistrée de flotter librement sans frottement avec l'emballage.

Autour du trou central 54, se dressent des dents d'encliquetage 57, 58 disposées en un cercle concentrique. Alternativement, elles se dressent, pour une moitié 57, sensiblement perpendiculaires sur la face tournée vers le couvercle 11 et, pour l'autre moitié 58, sur la face tournée vers la base 10 (voir Fig. 11).

Chaque série de dents 57, 58 est destinée à tenir un disque 56 avec déclic. La configuration des dents 57, 58 de l'invention permet de mieux tenir les disques 56 en place sans risque de détachement, d'une part, et de les libérer lors de la saisie avec les doigts dans les découpes 53, d'autre part.

Pour libérer le disque 56, on le saisit par les découpes de préhension 53. Pour améliorer l'encliquetage et le relâchement, le bord supérieur des dents 57, 58 est arrondi, puis il comporte une pente inclinée descendante et rétrécissante. Le bord supérieur arrondi facilite l'encliquetage et la pente le relâchement.

Selon une variante de l'invention, chaque face comporte entre les dents 57, 58 décrites ci-dessus, des dents parfaitement verticales, à 90°, de même hauteur, qui assurent un soutien des dents d'encliquetage 57, 58 du plateau porte-disques 12 au-dessus, lors de l'empilage, ce qui évite l'affaissement des plateaux 12 en leurs centres.

Une autre variante de réalisation du système de maintient des disques sera expliqué plus loin.

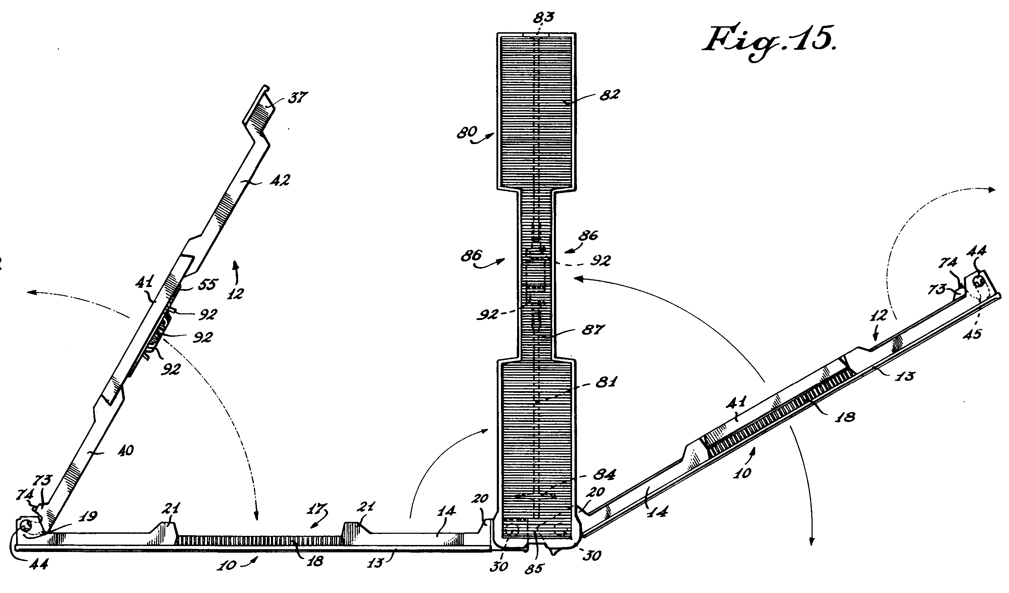

Selon un second mode d'exécution du plateau 63 suivant l'invention, représenté aux Fig. 13 et 14, le plateau est apte à ne porter qu'un seul disque. Dans ce cas, le plateau porte-disque 63 comporte une paire de protubérances d'ancrage 64 par côté, qui s'insèrent dans des ouvertures ou encoches correspondantes de la base 10. En effet, dans cette variante, le plateau 63 est inséré et bloqué dans la base 10 et ne s'articule plus sur l'avant de celle-ci. Les tourillons latéraux 44, la gorge 45 et les entailles 52 sont supprimés.

Quatre découpes 65 allongées sont ménagées le long des bords latéraux du plateau 63, au niveau des protubérances d'ancrage 64 de manière à permettre une légère compression du plateau 63 et ainsi de l'insérer dans les ouvertures ou encoches correspondantes de la base 10.

Au centre, le plateau 63 ne comporte de nervure circulaire 55 d'appui pour le disque 56 et de système de tenon que sur la face tournée vers le couvercle 11. L'autre face porte une bande circulaire 67 (de la hauteur des dents absentes). Cette bande d'appui 67 évite l'affaissement du centre lorsqu'on appuie sur lui, d'une part, et, d'autre part, maintient le centre de la feuille de titre en place sans qu'elle ne bombe.

Le coffret selon ce mode d'exécution de l'invention a l'avantage d'avoir les mêmes dimensions extérieures que les cassettes monodisques classiques et qu'il peut être fabriqué sur les mêmes chaînes de fabrication ainsi que sur les mêmes chaînes d'assemblage. Il comporte les mêmes dispositifs pour feuilles illustrées de titre et livrets avec page de couverture illustrée. Il a l'avantage supplémentaire dans sa version préférentielle de permettre le rangement de deux disques à la fois, avec les dimensions du monodisque, ce qui permet de ranger ces coffrets dans tous les systèmes de rangement de cassettes existants avec compartiments de l'épaisseur du monodisque.

Suivant un second mode d'exécution de l'invention, représenté aux Fig. 15 à 17, le coffret comporte cinq pièces : deux bases 10 identiques à celles décrites pour le premier mode d'exécution, deux plateaux porte-disque 12, 63 pouvant être aptes à porter un ou deux disques 56 et une pièce médiane 80 permettant l'articulation du tout.

La pièce médiane 80 comporte une plaque rectangulaire 81, deux parois latérales 82, une paroi frontale 83 et une paroi dorsale 84.

Les côtés frontal et dorsal de la plaque rectangulaire 81 ont la même longueur que les côtés frontal et dorsal du fond 13 de la base 10 et les côtés latéraux de la plaque 81 sont plus courts que ceux du fond 13 de la base 10.

Les deux parois latérales 82 de la pièce médiane 80 s'étendent de part et d'autre de la plaque 81 et ont une hauteur double de la hauteur des parois latérales 26 du couvercle 11. Ces parois 82 s'étendent en arrière, au-delà de la plaque rectangulaire 81 pour égaliser la longueur des parois latérales 14 de la base 10. Ces extensions forment des branches 85 et sont munies chacune de deux tourillons 30 destinés à s'insérer dans les ouvertures d'articulation 24 de l'arrière rehaussé 20 de la paroi latérale 14 de deux bases 10. La pièce médiane 80 comporte donc deux axes de pivotement à proximité de sa partie arrière, pour deux bases 10. Ces bases 10 sont aptes à s'emboîter de part et d'autre de la plaqué rectangulaire 81 et à pivoter, à plus de 180°.

Lorsque le coffret est fermé, les parois latérales 82 de la pièce médiane 80 enferment les parois latérales 14 des deux bases 10 et s'ajustent sur les petits bords des fonds 13 des bases 10, libérés par le retrait vers le centre des parois latérales 14 des bases 10.

Deux échancrures rectangulaires 86 sont ménagées dans la zone centrale de chaque paroi latérale 82 de la pièce médiane 80, une bande 87 subsistant entre les deux échancrures 86. Lorsque le coffret est fermé, une saillie latérale 36 d'un plateau 12, 63 et une nervure de renforcement 18 d'une base 10 viennent s'ajuster dans chaque échancrure 86 de la pièce médiane 80.

La paroi frontale 83 de la pièce médiane 80 s'insère, lorsque le coffret est fermé, entre le bord supérieur de la paroi frontale 15 des deux bases 10.

Ce coffret permet donc de contenir un ou deux disques 56 par plateau 12, 63 et peut encore comporter un disque 56 supplémentaire sur chacune des deux faces de la pièce médiane 80. Pour ce faire une pièce centrale (non représentée) avec nervure(s) circulaire(s) et système(s) de tenon doit être fixée au centre de la plaque 81 de la pièce médiane 80.

La plaque 81 de la pièce médiane 80 comporte, aux quatre coins, des découpes semi-circulaires 88 représentant une économie de matière et permettant l'insertion des doigts pour la préhension des disques 56 et le manipulement de la pièce médiane 80.

Le coffret suivant ce mode d'exécution de l'invention a l'avantage d'avoir les mêmes dimensions extérieures que les coffrets classiques prévus pour le rangement de 1 à 4 disques (EP 114 631) et permet de plus le rangement de 1 à 6 disques. Il peut être fabriqué sur les mêmes chaînes de fabrication et d'assemblage que celles prévues pour les coffrets classiques. Il comporte les mêmes feuilles illustrées de titre et peut encore contenir deux livrets de 2,5 mm d'épaisseur, en plus des six disques compacts.

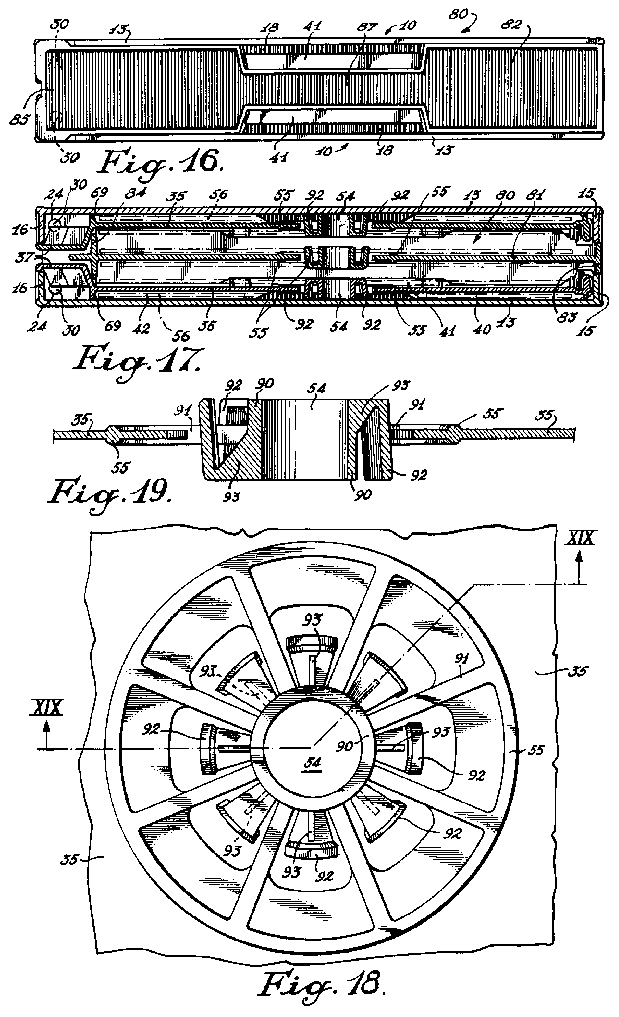

Aux Fig. 18 et 19, on peut voir une variante du système de maintien des disques. Par souci de facilité, ce système est ici représenté avec le coffret suivant le second mode d'exécution de l'invention (coffret pour 1 à 6 disques) mais pourrait tout aussi bien convenir pour le premier mode d'exécution (coffret pour 1 ou 2 disques), et vice versa. Le système de maintien des disques est indépendant des autres caractéristiques de l'invention.

Suivant cette variante, le plateau 12, 63 comporte un trou central 54 dans lequel est disposé un anneau 90. Le bord libre supérieur de l'anneau 90 est situé dans le même plan que le bord libre supérieur des nervures latérales 41 et son bord libre inférieur est situé dans le même plan que le bord libre inférieur des nervures latérales 40 et 42. Cet anneau 90 est relié à la plaque 35 du plateau 12 par des rayons 91.

Entre chaque rayon 91, un crochet 92 s'étend de l'anneau vers l'extérieur du trou 54 et se redresse verticalement avec un angle légèrement supérieur à 90°. Dans l'encoignure formée par l'anneau 90 et chaque crochet 92 se dresse un petit contrefort triangulaire 93. Les crochets de l'état de la technique, au contraire, sont tenus de l'extérieur, s'étendent vers l'intérieur du trou central du plateau et se redressent avec un angle de moins de 90°. Cette configuration ne permettait pas un relâchement aisé du disque maintenu car une traction sur le disque a pour effet d'augmenter la force de verrouillage du système de tenon. par contre, avec la configuration du système de tenon suivant l'invention, une légère traction sur le disque a pour effet de plier le crochet 92 légèrement vers l'intérieur et de relâcher le disque. La grande souplesse des crochets 92 permet une libération aisée des disques.

L'encliquetage des disques est facilité par la forme arrondie du côté extérieur du bord supérieur des crochets 92 et également par leur extrême souplesse. Après encliquetage, les crochets reprennent leur position légèrement oblique, ce qui assure le maintien ferme des disques pendant toute la durée de manipulation des plateaux 12, 63.

Cette configuration du système de tenon a aussi l'avantage de présenter un trou central, utile lors de l'empilement des plateaux les uns sur les autres pour le passage d'un doigt de centrage.

Un autre avantage de cette configuration est de présenter une plus grande surface plane horizontale dans le plan passant par les bords libres supérieur et inférieur du système de tenon. Ceci permet un empilement plus stable et plus aisé des plateaux les uns sur les autres, sans accrochage des dents entre deux plateaux.

## Revendications

1. Coffret pour au moins un disque (56) à haute densité d'enregistrement, constitué d'un boîtier et d'au moins un plateau porte-disque (12, 63), le boîtier étant formé d'une base (10) et d'un dispositif pivotant (11,80),
- la base (10) comportant un fond plat rectangulaire (13), deux parois latérales (14) près des côtés les plus longs du fond (13) et, une paroi frontale (15) et une paroi dorsale (16) près des côtés les plus courts du fond (13),
- le plateau porte-disque (12, 63) comportant une plaque (35) en substance rectangulaire apte à être disposée dans la base (10) du boîtier, les bords de cette plaque (35) situés respectivement à proximité des parois latérales, frontale et dorsale de la base (10) étant appelés bords latéraux, frontal et dorsal, le bord dorsal de ladite plaque (35) portant une bande (37) décalée vers le haut, ladite plaque (35) comportant au centre, sur au moins une de ses deux faces, un système de tenon adapté au diamètre du trou central du disque (56), pour le maintien de celui-ci,
- le dispositif pivotant (11,80) comportant des parois latérales (26, 82) de longueur sensiblement égale à celle des parois latérales (14) de la base (10) et étant apte à se rabattre sur la base (10) et le plateau (12, 63), le plateau (12, 63) étant disposé entre la base (10) et ledit dispositif,
caractérisé en ce qu'une échancrure (17, 27, 86) est ménagée dans la zone centrale correspondante de chacune des parois latérales (14, 26, 82) de la base (10) et du dispositif pivotant, le plateau porte-disque (12, 63) présentant des saillies latérales (36) aux endroits qui correspondent à ces échancrures (17, 27, 86) et portant des nervures de renforcement (40, 41, 42) latérales sur au moins une face le long de ses bords latéraux, les saillies latérales (36) et les nervures (41) qu'elles portent s'ajustant dans les échancrures (17, 27, 86) lorsque le boîtier est fermé.

2. Coffret suivant la revendication 1, caractérisé en ce que les échancrures (17) ménagées dans les parois latérales (14) de la base (10) laissent subsister des nervures de renforcement (18).

3. Coffret suivant l'une quelconque des revendications 1 et 2, caractérisé en ce que le dispositif pivotant fait office de couvercle (11) et comporte une paroi supérieure plane rectangulaire (25) dont le côté frontal et le côté arrière ont une longueur sensiblement égale aux côtés les plus courts du fond rectangulaire (13) de la base (10) et dont les côtés latéraux sont plus courts que les côtés les plus longs du fond rectangulaire (13) de la base (10), lesdites parois latérales (26) s'étendant vers l'arrière au-delà du côté arrière de la paroi supérieur (25) en y formant par leur extrémité libre des branches (29) pour le montage pivotant du couvercle (11) sur la base (10), à proximité de l'extrémité arrière des parois latérales (14) de cette base (10), ladite bande (37) décalée vers le haut étant, lorsque le boîtier est fermé, disposée sensiblement dans le même plan que la paroi supérieure (25) du couvercle (11).

4. Coffret suivant la revendication 3, caractérisé en ce que les échancrures (27) ménagées dans les parois latérales (26) du couvercle (11) laissent subsister des nervures de renforcement (28).

5. Coffret suivant l'une quelconque des revendications 1 et 2, caractérisé en ce qu'il comporte deux bases (10) , deux plateaux porte-disque (12, 63) et une pièce médiane (80),
la pièce médiane (80) comportant une plaque rectangulaire (81), dont le côté frontal et le côté arrière ont une longueur sensiblement égale aux côtés les plus courts du fond rectangulaire (13) de la base (10) et dont les côtés latéraux sont plus courts que les côtés les plus longs dudit fond (13), lesdites parois latérales (82) s'étendant de part et d'autre de la plaque rectangulaire et s'étendant vers l'arrière au-delà du côté arrière de la plaque rectangulaire (81) en y formant par leur extrémité libre des branches (85) pour le montage pivotant des deux bases (10), lesdites branches (85) comportant chacune deux tourillons (30) aptes à s'insérer dans des trous correspondants (24) ménagés à proximité de l'extrémité arrière des parois latérales (14) des bases (10), de telle sorte que chacune des deux bases (10) est apte à s'emboîter de part et d'autre de la plaque rectangulaire (81) et apte à s'articuler à plus de 180°, les deux axes de pivotement étant disposés à proximité des extrémités arrière des parois latérales (82) de la pièce médiane (80),
deux échancrures (86) étant ménagées dans chacune des parois latérales (82) de la pièce médiane (80) dans la zone correspondant à l'endroit où les saillies latérales (36) du plateau (12, 63) et les nervures (41) portées par lesdites saillies (36) viennent s'ajuster lorsque le boîtier est fermé, une bande (87) subsistant entre les échancrures (86) d'une même paroi latérale (82).

6. Coffret suivant la revendication 5, caractérisé en ce que la pièce médiane comporte d'un ou des deux côtés de la plaque (81), un système de tenon adapté au diamètre du trou central du disque (56) et une nervure circulaire concentrique, pour le support d'un ou deux disque(s) supplémentaire(s).

7. Coffret suivant l'une quelconque des revendications précédentes, caractérisé en ce que le plateau porte-disque (12, 63) porte une nervure de renforcement (47,48) sur au moins une de ses faces le long de son bord frontal.

8. Coffret suivant la revendication 7, caractérisé en ce que le plateau porte-disque (12, 63) porte une nervure de renforcement sur chacune de ses faces le long de son bord frontal, la nervure inférieure (47) étant, par rapport à la nervure supérieure (48) décalée vers le centre de ce plateau (12, 63) sur une distance qui correspond sensiblement à l'épaisseur de ces nervures (47, 48), en sorte que lorsque deux plateaux porte-disque (12, 63) sont superposés à la verticale l'un de l'autre, la nervure inférieure (47) du plateau (12, 63) supérieur peut passer à côté de la nervure supérieure (48) du plateau (12, 63) inférieur.

9. Coffret suivant la revendication 8, caractérisé en ce que la nervure de renforcement (48) supérieure portée par le bord frontal du plateau porte-disque (12, 63), porte des protubérances (49, 50) qui, lorsque deux plateaux porte-disque (12, 63) sont superposés à la verticale l'un de l'autre, servent d'arrêtoirs pour la nervure inférieure (47) du plateau (12, 63) supérieur.

10. Coffret suivant la revendication 9, caractérisé en ce que dans la nervure de renforcement inférieure (47) est ménagée au moins une encoche (51) qui, lorsque deux plateaux porte-disque (12, 63) sont superposés, est apte à recevoir une (49) desdites protubérances (49, 50) empêchant ainsi un glissement latéral des deux plateaux (12, 63) superposés, l'un par rapport à l'autre.

11. Coffret suivant l'une quelconque des revendications précédentes, caractérisé en ce que la plaque (35) du plateau porte-disque (12, 63) porte, le long de son bord dorsal, une nervure de renforcement (69) dirigée vers le fond (13) de la base (10).

12. Coffret suivant l'une quelconque des revendications précédentes, caractérisé en ce que la plaque (35) du plateau porte-disque (12, 63) présente, à proximité de ses quatre coins, des découpes (53) aptes à faciliter la préhension du disque (56) porté par le plateau porte-disque (12, 63).

13. Coffret suivant l'une quelconque des revendications précédentes, caractérisé en ce que le/les système(s) de tenon dont est pourvu le plateau porte-disque (12, 63) comporte(nt) une couronne de dents (57, 58) apte à être engagée dans le trou central du disque (56) et à serrer contre la paroi de ce trou.

14. Coffret suivant l'une quelconque des revendications 1 à 12, caractérisé en ce que le système de tenon dont est pourvu le plateau porte-disque (12, 63) comporte un anneau central (90), relié au plateau (12, 63) par des rayons (91), et des crochets (92) s'étendant de l'anneau (90) vers l'extérieur du plateau (12, 63), lesdits crochets (92) présentant un profil de verrouillage élastique.

15. Coffret suivant l'une quelconque des revendications précédentes, caractérisé en ce que le système de tenon est entouré d'une nervure circulaire concentrique (55) apte à servir d'appui au disque (56) dans sa zone centrale dépourvue de pistes d'information.

16. Coffret suivant l'une quelconque des revendications précédentes, caractérisé en ce que le plateau porte-disque (12, 63) comporte, dans l'encoignure formée par les nervures latérales (40, 41) et la plaque (35), des ailettes (70) s'étendant vers le centre du plateau (12, 63), perpendiculairement à ses bords latéraux et comportant un bord libre oblique (72) s'étendant de la plaque (35) à un plan horizontal (71) passant par le bord libre supérieur des nervures latérales (41).

17. Coffret suivant l'une quelconque des revendications précédentes, caractérisé en ce que les nervures de renforcement latérales (40) du plateau (12, 63) portent sur leur face supérieur, à proximité du bord frontal du plateau (12, 63) une protubérance (73) dont le bord libre supérieur est situé dans le même plan horizontal que le bord libre supérieur des nervures latérales centrales (41).

18. Coffret suivant la revendication 17, caractérisé en ce que le plateau (12, 63) comporte, dans l'encoignure de ladite protubérance (73) et de la plaque (35) une ailette (74) s'étendant perpendiculairement aux bords latéraux du plateau (12, 63), vers le centre de celui-ci, cette ailette (74) étant légèrement plus haute que la protubérance (73) de manière à constituer une butée empêchant le glissement latéral des plateaux (12, 63) empilés les uns au-dessus des autres.

19. Coffret suivant l'une quelconque des revendications précédentes, caractérisé en ce que le plateau porte-disques (12) est muni d'un système de tenon et d'une nervure circulaire (55) concentrique sur chacune de ses deux faces de telle sorte que ledit plateau (12) est apte à porter deux disques (56).

20. Coffret suivant la revendication 19, caractérisé en ce que le plateau porte-disques (12) est apte à pivoter suivant un axe situé le long d'une des parois de la base (10), le plateau (12) comportant deux tourillons aptes à s'insérer dans des ouvertures correspondantes ménagées dans les parois de la base (10).

21. Coffret suivant l'une quelconque des revendications 19 et 20, caractérisé en ce que le plateau porte-disque (12) est apte à pivoter suivant un axe situé le long de la paroi frontale de la base (10), la nervure supérieure (48) portée par le bord frontal du plateau (12) portant, à ses extrémités latérales (43), un tourillon (44) dirigé latéralement, apte à s'insérer dans des ouvertures (23) correspondantes ménagées dans les parois latérales (14) de la base (10), près de la paroi frontale (15).

22. Coffret suivant la revendication 21, caractérisé en ce que lesdites ouvertures (23) ménagées dans les parois latérales (14) de la base (10), sont ménagées dans une partie rehaussée (19) de ces parois (14), le plateau porte-disques (12) comportant une gorge (45) le long de son bord frontal, de telle sorte que le plateau (12) est apte à pivoter de plus de 180° autour dudit axe de pivotement.

23. Coffret suivant l'une quelconque des revendications 21 et 22, caractérisé en ce que deux entailles (52) sont ménagées dans la nervure supérieure (48) portée par le bord frontal du plateau (12), à proximité de ses bords latéraux, en sorte que le bord frontal du plateau (12) possède suffisamment de souplesse pour que les tourillons (44) puissent être insérés dans les ouvertures (23) correspondantes de la base (10).

24. Coffret suivant l'une quelconque des revendications 1 à 18, caractérisé en ce que le plateau porte-disque (63) est pourvu, sur sa face supérieure uniquement, d'un système de tenon et d'une nervure circulaire (55) concentrique, en sorte que le plateau (63) est apte à recevoir un seul disque (56).

25. Coffret suivant la revendication 24, caractérisé en ce que le plateau porte-disque (63) comporte sur ses bords latéraux des protubérances d'ancrage (64) dirigées latéralement et aptes à s'engager dans des ouvertures ou encoches correspondantes ménagées dans les parois latérales (14) de la base (10), en sorte que le plateau (63) est apte à être inséré et maintenu dans la base (10).

26. Coffret suivant la revendication 25, caractérisé en ce que des découpes allongées (65) sont ménagées le long des bords latéraux du plateau porte-disque (63), au niveau des protubérances d'ancrage (64), de manière à faciliter l'insertion du plateau (63) dans la base (10).

27. Coffret suivant l'une quelconque des revendications 24 à 26, caractérisé en ce que le plateau porte-disque (63) comporte, sur sa face inférieure, un organe d'appui (67) disposé dans la zone centrale de la plaque (35) du plateau (63), de manière à empêcher l'écrasement du plateau (63) contre le fond (13) de la base (10).

## Patentansprüche

1. Box für wenigstens eine Disk (56) mit hoher Aufnahmedichte, die aus einem Gehäuse und wenigstens einer CD-Tragplatte (12, 63) gebildet ist, wobei das Gehäuse aus einer Basis (10) und einer schwenkbaren Vorrichtung (11, 80) gebildet ist,
- wobei die Basis (10) einen ebenen rechteckigen Boden (13), zwei Seitenwände (14) nahe den längsten Seiten des Bodens (13) und eine Vorderwand (15) und eine Rückenwand (16) nahe den kürzesten Seiten des Bodens (13) aufweist,
- wobei die CD-Tragplatte (12, 63) eine Platte (35) von rechteckiger Form aufweist, die geeignet ist, in der Basis (10) des Gehäuses angeordnet zu werden, wobei die Kanten dieser Platte (35), die Seiten-, Vorder- und Rückenkante genannt werden, jeweils in Nähe der Seitenwände, der Vorder- und der Rückenwand der Basis (10) gelagert sind, wobei die Rückenkante der Platte (35) einen nach oben abgesetzten Rand (37) trägt, wobei die Platte (35) im Mittelpunkt auf wenigstens einer ihrer zwei Seiten ein Zapfensystem aufweist, das dem Durchmesser des Mittelloches der Disk (56) für deren Halten angepaßt ist,
- wobei die schwenkbare Vorrichtung (11, 80) Seitenwände (26, 82) mit praktisch einer Länge aufweist, die gleich der der Seitenwände (14) der Basis (10) ist, und sie geeignet ist, sich auf die Basis (10) und die Platte (12, 63) herunterzuklappen, wobei die Platte (12, 63) zwischen der Basis (10) und der Vorrichtung angeordnet ist,
dadurch gekennzeichnet, daß ein bogenförmiger Ausschnitt (17, 27, 86) in der entsprechenden Mittelzone jeder der Seitenwände (14, 26,82) der Basis (10) und der schwenkbaren Vorrichtung angebracht ist, wobei die CD-Tragplatte (12, 63) seitliche Vorsprünge (36) an den Orten, die diesen bogenförmigen Ausschnitten (17, 27, 86) entsprechen, aufweist, und seitliche Verstärkungsrippen (40, 41, 42) auf wenigstens einer Seite entlang ihrer Seitenkanten trägt, wobei sich die seitlichen Vorsprünge (36) und die Rippen (41), die sie tragen, in die bogenförmigen Ausschnitte (17, 27, 86) einpassen, wenn das Gehäuse geschlossen ist.

2. Box gemäß Anspruch 1, dadurch gekennzeichnet, daß die in den Seitenwänden (14) der Basis (10) angeordneten gebogenen Ausschnitte (17) Verstärkungsrippen (18) fortbestehen lassen.

3. Box gemäß irgendeinem der Ansprüche 1 und 2, dadurch gekennzeichnet, daß die schwenkbare Vorrichtung als Deckel (11) dient und sie eine obere ebene rechteckige Wand (25) aufweist, deren Vorder- und Rückseite eine Länge haben, die praktisch gleich den kürzesten Seiten des rechteckigen Bodens (13) der Basis (10) ist, und deren seitliche Seiten kürzer sind als die längsten Seiten des rechteckigen Bodens (13) der Basis (10), wobei sich die Seitenwände nach hinten über die Rückseite der oberen Wand (25) hinaus erstrecken, wobei sie dort durch ihr freies Ende Schenkel (29) für die schwenkbare Anbringung des Deckels (11) auf der Basis (10) bilden, wobei in der Nähe des hinteren Endes der Seitenwände (14) dieser Basis (10) der nach oben abgesetzte Rand (37) praktisch in derselben Ebene wie die obere Wand (25) des Deckels (11) angeordnet ist, wenn das Gehäuse geschlossen ist.

4. Box gemäß Anspruch 3, dadurch gekennzeichnet, daß die in den Seitenwänden (26) des Deckels (11) angeordneten gebogenen Ausschnitte (27) Verstärkungsrippen (28) fortbestehen lassen.

5. Box gemäß irgendeinem der Ansprüche 1 und 2, dadurch gekennzeichnet, daß sie zwei Basen (10), zwei CD-Tragplatten (12, 63) und ein Mittelstück (80) aufweist,
wobei das Mittelstück (80) eine rechteckige Platte (81) aufweist, deren Vorder- und Rückseite eine Länge haben, die praktisch gleich den kürzesten Seiten des rechteckigen Bodens (13) der Basis (10) ist, und deren seitliche Seiten kürzer sind als die längsten Seiten des Bodens (13), wobei sich die Seitenwände (82) beidseits der rechteckigen Platte und nach hinten über die Rückseite der rechteckigen Platte (81) hinaus erstrecken, wobei sie dort durch ihr freies Ende Schenkel (85) für die schwenkbare Anbringung der beiden Basen (10) bilden,
wobei die Schenkel (85) jeweils zwei Drehzapfen (30) aufweisen, die geeignet sind, in die entsprechenden Löcher (24) einzugreifen, die in Nähe zum hinteren Ende der Seitenwände (14) der Basen (10) angebracht sind, derart, daß jede der beiden Basen (10) geeignet ist, beidseits von der rechteckigen Platte (81) ineinanderzupassen und sich um mehr als 180° schwenken zu können, wobei die beiden Schwenkachsen in Nähe der hinteren Enden der Seitenwände (82) des Mittelstücks (80) angeordnet sind,
wobei zwei gebogene Ausschnitte (86) in jeder der Seitenwände (82) des Mittelstücks (80) in dem Bereich angebracht sind, der dem Ort entspricht, wo die seitlichen Vorsprünge (36) der Platte (12, 63) und die von den Vorsprüngen getragenen Rippen (41) zusammenpassen, wenn das Gehäuse geschlossen ist, wobei ein Rand (87) zwischen den gebogenen Ausschnitten (86) einer selben Seitenwand (82) erhalten bleibt.

6. Box gemäß Anspruch 5, dadurch gekennzeichnet, daß das Mittelstück auf der einen oder auf beiden Seiten der Platte (81) ein Zapfensystem, das dem Durchmesser des Mittellochs der Disk (56) angepaßt ist, und eine konzentrisch kreisförmige Rippe aufweist, für das Tragen einer oder zwei zusätzlicher Disks.

7. Box gemäß irgendeinem der vorherigen Ansprüche, dadurch gekennzeichnet, daß die CD-Tragplatte (12, 63) eine Verstärkungsrippe (47, 48) auf jeder ihrer Seiten entlang ihrer Vorderkante trägt.

8. Box gemäß Anspruch 7, dadurch gekennzeichnet, daß die CD-Tragplatte (12, 63) eine Verstärkungsrippe auf jeder ihrer Seiten entlang ihrer Vorderkante trägt, wobei die untere Rippe (47) bezüglich der oberen Rippe (48) zum Mittelpunkt dieser Platte (12, 63) hin auf einem Abstand versetzt ist, der praktisch der Dicke dieser Rippen (47, 48) entspricht, so daß, wenn zwei CD-Tragplatten (12, 63) vertikal übereinandergesetzt sind, die untere Rippe (47) der oberen Platte (12, 63) seitlich an der oberen Rippe (48) der unteren Platte (12, 63) vorbeigehen kann.

9. Box gemäß Anspruch 8, dadurch gekennzeichnet, daß die von der Vorderkante der CD-Tragplatte (12, 63) getragene obere Verstärkungsrippe (48) Ausstülpungen (49, 50) trägt, die, wenn zwei CD-Tragplatten (12, 63) vertikal übereinandergesetzt sind, als Halteanschläge für die untere Rippe (47) der oberen Platte (12, 63) dienen.

10. Box gemäß Anspruch 9, dadurch gekennzeichnet, daß in der unteren Verstärkungsrippe (47) wenigstens eine Aussparung (51) angebracht ist, die, wenn zwei CD-Tragplatten (12, 63) übereinandergesetzt sind, geeignet ist, eine (49) der Ausstülpungen (49, 50) aufzunehmen, wobei so ein seitliches Weggleiten gegeneinander der beiden übereinandergesetzten Platten (12, 63) verhindert wird.

11. Box gemäß irgendeinem der vorherigen Ansprüche, dadurch gekennzeichnet, daß die Platte (35) der CD-Tragplatte (12, 63) entlang ihrer Rückenkante eine Verstärkungsrippe (69) trägt, die zum Boden (13) der Basis (10) hin gerichtet ist.

12. Box gemäß irgendeinem der vorherigen Ansprüche, dadurch gekennzeichnet, daß die Platte (35) der CD-Tragplatte (12, 63) in der Nähe ihrer vier Ecken Ausschnitte (53) aufweist, die geeignet sind, das Greifen der von der CD-Tragplatte (12, 63) getragenen Disk (56) zu erleichtern.

13. Box gemäß irgendeinem der vorherigen Ansprüche, dadurch gekennzeichnet, daß das/die Zapfensystem(e), mit dem die CD-Tragplatte (12, 63) ausgestattet ist, eine Zahnkrone (57, 58) aufweist(aufweisen), die geeignet ist, in das Mittelloch der Disk (56) einzugreifen und sich gegen die Wand dieses Lochs zu pressen.

14. Box gemäß irgendeinem der Ansprüche 1 bis 12, dadurch gekennzeichnet, daß das Zapfensystem, mit dem die CD-Tragplatte (12, 63) ausgestattet ist, einen Mittelring (90) aufweist, der durch Speichen (91) mit der Platte verbunden ist, und Haken (92), die sich von dem Ring (90) zum Äußeren der Platte (12, 63) hin erstrecken, wobei die Haken (92) ein elastisches Verriegelungsprofil aufweisen.

15. Box gemäß irgendeinem der vorherigen Ansprüche, dadurch gekennzeichnet, daß das Zapfensystem von einer konzentrischen kreisförmigen Rippe (55) umgeben ist, die geeignet ist als Auflage für die Disk (56) in ihrem Mittelbereich zu dienen, der von Informationsspuren ausgespart ist.

16. Box gemäß irgendeinem der vorherigen Ansprüche, dadurch gekennzeichnet, daß die CD-Tragplatte (12, 63) in der von den Seitenrippen (40, 41) und der Platte (35) gebildeten inneren Ecke Stege (70) aufweist, die sich zum Mittelpunkt der Platte hin (12, 63) senkrecht zu ihren Seitenkanten erstrecken, und die einen schrägen freien Rand (72) aufweisen, der sich von der Platte (35) bis zu einer horizontalen Ebene (71) erstreckt, die durch den oberen freien Rand der Seitenrippen (41) geht.

17. Box gemäß irgendeinem der vorherigen Ansprüche, dadurch gekennzeichnet, daß die seitlichen Verstärkungsrippen (40) der Platte (12, 63) auf ihrer oberen Seite in der Nähe der Vorderkante der Platte (12, 63) eine Ausstülpung (73) tragen, deren freie obere Kante in derselben horizontalen Ebene wie die freie obere Kante der seitlichen Mittelrippen (41) gelagert ist.

18. Box gemäß Anspruch 17, dadurch gekennzeichnet, daß die Platte (12, 63) in der inneren Ecke der Ausstülpung (73) und der Platte (35) einen Steg (74) aufweist, der sich senkrecht zu den Seitenkanten der Platte (12, 63) zu derem Mittelpunkt hin erstreckt, wobei dieser Steg (74) leicht höher ist als die Ausstülpung (73), derart, daß er einen Anschlag bildet, der das seitliche Weggleiten der aufeinander aufgestapelten Platten (12, 63) verhindert.

19. Box gemäß irgendeinem der vorherigen Ansprüche, dadurch gekennzeichnet, daß die CD-Tragplatte (12) mit einem Zapfensystem und einer konzentrischen kreisförmigen Rippe (55) auf jeder ihrer zwei Seiten derart ausgestattet ist, daß die Platte (12) geeignet ist, zwei Disks (56) zu tragen.

20. Box gemäß Anspruch 19, dadurch gekennzeichnet, daß die CD-Tragplatte (12) geeignet ist, gemäß einer entlang einer der Wände der Basis (10) gelagerten Achse zu schwenken, wobei die Platte (12) zwei Drehzapfen aufweist, die geeignet sind, sich in die entsprechenden in den Wänden der Basis (10) angebrachten Öffnungen zu schieben.

21. Box gemäß irgendeinem der Ansprüche 19 und 20, dadurch gekennzeichnet, daß die CDs-Tragplatte (12) geeignet ist, gemäß einer Achse zu schwenken, die entlang der Vorderwand der Basis (10) gelagert ist, wobei die von der Vorderkante der Platte (12) getragene obere Rippe (48) an ihren Seitenenden (43) einen seitlich ausgerichteten Drehzapfen (44) trägt, der geeignet ist, sich in die entsprechenden in den Seitenwänden (14) der Basis (10) nahe der Vorderwand (15) angebrachten Öffnungen (23) zu schieben.

22. Box gemäß Anspruch 21, dadurch gekennzeichnet, daß die in den Seitenwänden (14) der Basis (10) angebrachten Öffnungen (23) in einem erhöhten Teil (19) dieser Wände (14) angebracht sind, wobei die CDs-Tragplatte (12) eine Rille (45) entlang ihrer Vorderkante aufweist, derart, daß die Platte (12) geeignet ist, um mehr als 180° um die Schwenkachse zu schwenken.

23. Box gemäß irgendeinem der Ansprüche 21 und 22, dadurch gekennzeichnet, daß zwei Einkerbungen in der von der Vorderkante der Platte (12) getragenen oberen Rille (48) in der Nähe der Seitenkanten der Platte angebracht sind, so daß die Vorderkante der Platte (12) genügend Biegsamkeit besitzt, damit die Drehzapfen (44) in die entsprechenden Öffnungen (23) der Basis (10) eingeschoben werden können.

24. Box gemäß irgendeinem der Ansprüche 1 bis 18, dadurch gekennzeichnet, daß die CD-Tragplatte (63) einzig auf ihrer oberen Seite mit einem Zapfensystem und einer konzentrischen kreisförmigen Rippe (55) ausgestattet ist, so daß die Platte (63) geeignet ist, eine einzige Disk (56) aufzunehmen.

25. Box gemäß Anspruch 24, dadurch gekennzeichnet, daß die CD-Tragplatte (63) auf ihren Seitenkanten seitlich ausgerichtete Verankerungsausstülpungen (64) aufweist, die geeignet sind, in die entsprechenden in den Seitenwänden (14) der Basis (10) angebrachten Öffnungen oder Einkerbungen einzugreifen, so daß die Platte (63) geeignet ist, in die Basis (10) hineingeschoben und in ihr gehalten zu werden.

26. Box gemäß Anspruch 25, dadurch gekennzeichnet, daß die länglichen Ausschnitte (65) entlang den Seitenkanten der CD-Tragplatte (63) auf der Höhe der Verankerungsausstülpungen (64) derart angebracht sind, daß sie das Einlegen der Platte (63) in die Basis (10) erleichtern.

27. Box gemäß irgendeinem der Ansprüche 24 bis 26, dadurch gekennzeichnet, daß die CD-Tragplatte (63) auf ihrer unteren Seite ein Auflageorgan (67) aufweist, das in dem Mittelbereich der Platte (35) der Tragplatte (63) angeordnet ist, derart, daß ein Drücken der Tragplatte (63) gegen den Boden (13) der Basis (10) vermieden wird.

## Claims

1. Casing for at least one disk (56) with a high recording density, constituted by a case and at least one disk-holder tray (12, 63), the case being formed from a base (10) and a pivoting device (11, 80),
- the base (10) comprising a rectangular flat bottom (13), two lateral walls (14) close to the longest sides of the bottom (13) and a front wall (15) and a back wall (16) close to the shortest sides of the bottom (13),
- the disk-holder tray (12, 63) comprising a substantially rectangular plate (35) capable of being disposed in the base (10) of the case, the edges of this plate (35) situated respectively in proximity to the lateral, front and back walls of the base (10) being called lateral, front and back edges, the back edge of the said plate (35) carrying a strip (37) which is offset upwards, the said plate (35) comprising, in the centre, on at least one of its two faces, a tenon system matched to the diameter of the central hole of the disk (56), for holding the latter,
- the pivoting device (11, 80) comprising lateral walls (26, 82) of length substantially equal to that of the lateral walls (14) of the base (10) and being capable of being folded back onto the base (10) and the tray (12, 63), the tray (12, 63) being disposed between the base (10) and the said device,
characterised in that a recess (17, 27, 86) is formed in the corresponding central area of each of the lateral walls (14, 26, 82) of the base (10) and of the pivoting device, the disk-holder tray (12, 63) having lateral protrusions (36) at the places which correspond to these recesses (17, 27, 86) and carrying lateral strengthening ribs (40, 41, 42) over at least one face along its lateral edges, the lateral protrusions (36) and the ribs (41) which they carry fitting into the recesses (17, 27, 86) when the casing is closed.

2. Casing according to claim 1, characterised in that the recesses (17) formed in the lateral walls (14) of the base (10) allow strengthening ribs (18) to remain.

3. Casing according to any one of claims 1 or 2, characterised in that the pivoting device serves as a cover (11) and comprises an upper flat rectangular wall (25) whose front side and rear side are of length substantially equal to the shortest sides of the rectangular bottom (13) of the base (10) and whose lateral sides are shorter than the longest sides of the rectangular bottom (13) of the base (10), the said lateral walls (26) extending backwards beyond the rear side of the upper wall (25) and forming there, with their free ends, arms (29) for the pivoting mounting of the cover (11) on the base (10), in proximity to the rear end of the lateral walls (14) of this base (10), the said upward offset strip (37) being, when the casing is closed, disposed substantially in the same plane as the upper wall (25) of the cover (11).

4. Casing according to claim 3, characterised in that the recesses (27) formed in the lateral walls (26) of the cover (11) allow strengthening ribs (28) to remain.

5. Casing according to any one of claims 1 or 2, characterised in that it comprises two bases (10), two disk-holder trays (12, 63) and one median part (80), the median part (80) comprising a rectangular plate (81), whose front side and rear side have a length substantially equal to the shortest sides of the rectangular bottom (13) of the base (10) and whose lateral sides are shorter than the longest sides of the said bottom (13), the said lateral walls (82) extending on either side of the rectangular plate and extending towards the rear beyond the rear side of the rectangular plate (81) forming there, with their free ends, arms (85) for the pivoting mounting of the two bases (10), the said arms (85) each comprising two spindles (30) capable of being inserted in corresponding holes (24) formed in proximity to the rear end of the lateral walls (14) of the bases (10), such that each of the two bases (10) is capable of being fitted on either side of the rectangular plate (81) and is capable of articulating through more than 180°, the two pivoting axes being disposed in proximity to the rear ends of the lateral walls (82) of the median part (80), two recesses (86) being formed in each of the lateral walls (82) of the median part (80) in the area corresponding to the place where the lateral protrusions (36) of the tray (12, 63) and the ribs (41) carried by the said protrusions (36) fit when the casing is closed, a strip (87) remaining between the recesses (86) of a same lateral wall (82).

6. Casing according to claim 5, characterised in that the median part comprises on one or both sides of the plate (81) a tenon system matched to the diameter of the central hole of the disk (56) and a concentric circular rib for supporting one or two additional disks.

7. Casing according to any one of the preceding claims, characterised in that the disk-holder tray (12, 63) carries a strengthening rib (47, 48) on at least one of its faces along its front edge.

8. Casing according to claim 7, characterised in that the disk-holder tray (12, 63) carries a strengthening rib on each of its faces along its front edge, the lower rib (47) being, with respect to the upper rib (48), offset towards the centre of the tray (12, 63) by a distance which substantially corresponds to the thickness of these ribs (47, 48) such that, when two disk-holder trays (12, 63) are superimposed vertically, the lower rib (47) of the upper tray (12, 63) can pass by the side of the upper rib (48) of the lower tray (12, 63).

9. Casing according to claim 8, characterised in that the upper strengthening rib (48) carried by the front edge of the disk-holder tray (12, 63) carries protuberances (49, 50) which, when two disk-holder trays (12, 63) are superimposed vertically, serve as stops for the lower rib (47) of the upper tray (12, 63).

10. Casing according to claim 9, characterised in that in the lower strengthening rib (47) there is formed at least one notch (51) which, when two disk-holder trays (12, 63) are superimposed, is capable of receiving one (49) of the said protuberances (49, 50) thus preventing lateral sliding of the two superimposed trays (12, 63) with respect to each other.

11. Casing according to any one of the preceding claims, characterised in that the plate (35) of the disk-holder tray (12, 63) carries along its back edge a strengthening rib (69) directed towards the bottom (13) of the base (10).

12. Casing according to any one of the preceding claims, characterised in that the plate (35) of the disk-holder tray (12, 63) has, in proximity to its four corners, cutouts (53) suitable for facilitating the grasping of the disk (56) carried by the disk-holder tray (12, 63).

13. Casing according to any one of the preceding claims, characterised in that the tenon system or systems with which the disk-holder tray (12, 63) is provided, comprises a ring of teeth (57, 58) capable of being engaged in the central hole of the disk (56) and of clamping against the wall of this hole.

14. Casing according to any one of claims 1 to 12, characterised in that the tenon system with which the disk-holder tray (12, 63) is provided, comprises a central ring (90), connected to the tray (12, 63) by spokes (91), and hooks (92) extending from the ring (90) towards the outside of the tray (12, 63), the said hooks (92) having an elastic locking profile.

15. Casing according to any one of the preceding claims, characterised in that the tenon system is surrounded by a circular concentric rib (55) capable of serving as a support for the disk (56) in its central area which has no data tracks.

16. Casing according to any one of the preceding claims, characterised in that the disk-holder tray (12, 63) comprises, in the corner formed by the lateral ribs (40, 41) and the plate (35), fins (70) extending towards the centre of the tray (12, 63), perpendicular to its lateral edges and comprising a free oblique edge (72) extending from the plate (35) to a horizontal plane passing through the upper free edge of the lateral ribs (41).

17. Casing according to any one of the preceding claims, characterised in that the lateral strengthening ribs (40) of the tray (12, 63) carry on their upper face, in proximity to the front edge of the tray (12, 63), a protuberance (73) whose upper free edge is located in the same horizontal plane (71) as the upper free edge of the central lateral ribs (41).

18. Casing according to claim 17, characterised in that the tray (12, 63) comprises, in the corner of the said protuberance (73) and of the rectangular plate (35), a fin (74) extending perpendicular to the lateral edges of the tray (12, 63), towards the central of the latter, this fin (74) being slightly higher than the protuberance (73) so as to constitute a stop preventing the lateral sliding of trays (12, 63) stacked on top of one another.

19. Casing according to any one of the preceding claims, characterised in that the disk-holder tray (12) is provided with a tenon system and a concentric circular rib (55) on each of its two faces such that the said tray (12) is capable of carrying two disks (56).

20. Casing according to claim 19, characterised in that the disk-holder tray (12) is capable of pivoting about an axis located along one of the walls of the base (10), the tray (12) comprising two spindles capable of being inserted in corresponding openings formed in the walls of the base (10).

21. Casing according to any one of claims 19 or 20, characterised in that the disk-holder tray (12) is capable of pivoting about an axis located along the front wall of the base (10), the upper rib (48) carried by the front edge of the tray (12) carrying, at its lateral ends (43), a laterally directed spindle (44), capable of being inserted in corresponding openings (23) formed in the lateral walls (14) of the base (10) close to the front wall (15).

22. Casing according to claim 21, characterised in that the said openings (23) formed in the lateral walls (14) of the base (10) are formed in a raised section (19) of these walls (14), the disk-holder (12) tray comprising a groove (45) along its front edge such that the tray (12) is capable of pivoting through more than 180° about the axis of pivoting.

23. Casing according to any one of claims 21 or 22, characterised in that two cutouts (52) are formed in the upper rib (48) carried by the front edge of the tray (12), in proximity to its lateral edges, such that the front edge of the tray (12) has sufficient flexibility that the spindles (44) can be inserted in the corresponding openings (23) of the base (10).

24. Casing according to any one of claims 1 to 18, characterised in that the disk-holder tray (63) is provided, on its upper face only, with its tenon system and a concentric circular rib (55), such that the tray (63) is capable of receiving a single disk (56).

25. Casing according to claim 24, characterised in that the disk-holder tray (63) comprises, on its lateral edges, anchoring protuberances (64) directed laterally and capable of being engaged in corresponding openings or notches formed in the lateral walls (14) of the base (10), such that the tray (63) is capable of being inserted and held in the base (10).

26. Casing according to claim 25, characterised in that elongated cutouts (65) are formed along the lateral edges of the disk-holder tray (63), at the level the anchoring protuberances (64), in order to facilitate the insertion of the tray (63) in the base (10).

27. Casing according to any one of claim 24 to 26, characterised in that the disk-holder tray (63) comprises, on its lower face, a support member (67) disposed in the central area of the plate (35) of the tray (63), in order to prevent the crushing of the tray (63) against the bottom (13) of the base (10).
